# EUROPEAN PATENT APPLICATION

(11) **EP 4 827 005 A1**
(43) Date of publication of application: **21.10.2026**
(21) Application number: 24918700.6
(22) Date of filing: 18.01.2024
(51) Int. Cl.: H04B 7/024

(54) **COMMUNICATION CONTROL METHOD AND DISTRIBUTED ANTENNA SYSTEM**

(71) Applicant: NTT, Inc., Tokyo 100-8116 (JP); NTT DOCOMO, INC., Tokyo 100-6150 (JP)
(72) Inventor: WAI Shuki, Musashino-shi, Tokyo 180-8585 (JP); ARAI Takuto, Musashino-shi, Tokyo 180-8585 (JP); UCHIDA Daisei, Musashino-shi, Tokyo 180-8585 (JP); IWAKUNI Tatsuhiko, Musashino-shi, Tokyo 180-8585 (JP); KITA Naoki, Musashino-shi, Tokyo 180-8585 (JP); ONIZAWA Takeshi, Musashino-shi, Tokyo 180-8585 (JP); SUYAMA Satoshi, Tokyo 100-6150 (JP); TATEISHI Kiichi, Tokyo 100-6150 (JP); MATSUMURA Yuki, Tokyo 100-6150 (JP)
(74) Representative: Santarelli
(86) International application number: PCT/JP2024/001282
(87) International publication number: WO 2025/154232

(57) **Abstract**

A communication control method to be executed by a distributed antenna system for controlling coherent transmission between a terminal, which communicates with a signal processing apparatus or a higher-level signal processing apparatus through multiple distributed antennas that execute coherent joint transmission, and the multiple distributed antennas, wherein the communication control method includes: a step of estimating, for each distributed antenna among the multiple distributed antennas, a propagation delay offset in the terminal for propagation from the signal processing apparatus or the higher-level signal processing apparatus to the terminal in accordance with a propagation delay from the signal processing apparatus or the higher-level signal processing apparatus to the terminal, or a propagation delay offset in the terminal for propagation from the multiple distributed antennas to the terminal in accordance with a propagation delay from the signal processing apparatus or the higher-level signal processing apparatus to the multiple distributed antennas and a propagation delay from the multiple distributed antennas to the terminal; and a step of controlling a transmission timing for each distributed antenna so that the propagation delay offset estimated for each distributed antenna is less than or equal to a tolerable delay offset.

## Description

### [Technical Field]

The present invention relates to a communication control method and a distributed antenna system.

### [Background Art]

In cellular systems, there are cases in which a base station is arranged to be in each cell defined within a wireless communication area. The base station is provided with a signal processing apparatus and an antenna. Each base station uses the signal processing apparatus and the antenna to communicate with terminals in the cell in which that station is located. In this case, there are cases in which radio signals arriving at a local cell from another cell cause interference, thereby degrading the communication quality in terminals near the boundaries of the local cell.

In contrast therewith, in a distributed antenna system, multiple antennas (distributed antennas) connected to a signal processing apparatus are arranged to be distributed in a wireless communication area. In a distributed antenna system, the interference of radio signals between distributed antennas can be reduced by the distributed antennas executing coherent joint transmission.

When a terminal is provided with multiple terminal antennas, the transmission rate can be increased by the multiple distributed antennas executing coherent joint transmission, and SU-MIMO (Single User-Multi Input Multi Output) being executed between the multiple distributed antennas and the multiple terminal antennas. Additionally, since the spatial correlation is reduced by the arrival of radio signals at the terminal antennas from multiple distributed antennas, the transmission rate can be expected to further increase.

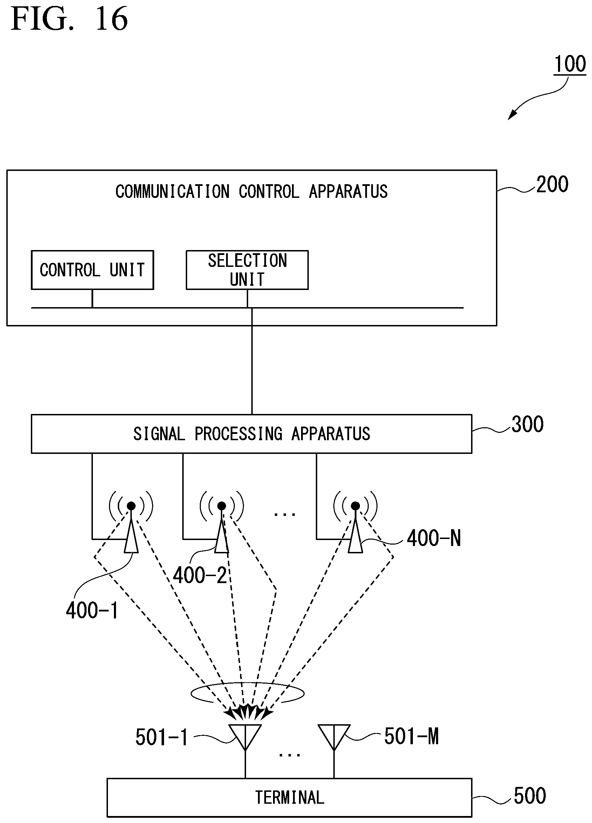

FIG. 16 is a diagram illustrating an example of a configuration of a distributed antenna system 100. The distributed antenna system 100 is provided with a communication control apparatus 200, a signal processing apparatus 300, N (where N is an integer greater than or equal to 2) distributed antennas 400, and one or more terminals 500. The communication control apparatus 200 is provided with a selection unit and a control unit. The terminal 500 is provided with M (where M is an integer greater than or equal to 1) terminal antennas 501. The multiple distributed antennas 400 execute coherent joint transmission.

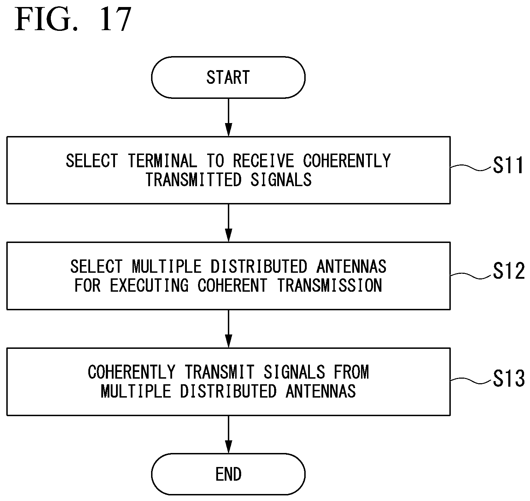

FIG. 17 is a sequence diagram indicating an example of operations in the distributed antenna system 100. The selection unit selects a terminal 500 to receive radio signals that have been coherently transmitted (step S11). The selection unit selects multiple distributed antennas 400 for executing coherent transmission from among all of the distributed antennas 400 connected to the signal processing apparatus 3 (step S12). The control unit coherently transmits the radio signals to the terminal 500 from the multiple distributed antennas 400 that were selected (step S13). Additionally, Non-Patent Document 1 discloses a distributed antenna system that communicates by using radio signals in a high frequency band.

In wireless communication, multipath from reflected waves or the like can create waves that are delayed with respect to direct waves. In terminals that have received the delayed waves, the communication quality is degraded by inter-symbol interference. Therefore, there are cases in which guard intervals (GI) are added to signals so that the communication quality will not be degraded. Inter-symbol interference can be prevented as long as the delay is within the time at which the guard interval arrives.

Additionally, even in an environment in which delayed waves arrive at a terminal after the time at which a guard interval arrives at the terminal, in orthogonal frequency dimension modulation (OFDM), the symbol rate is lowered, thereby keeping the communication quality from being degraded by inter-symbol interference. Thus, there is a tolerable delay timing for which a prescribed communication quality is satisfied.

### [Citation List]

### [Non Patent Literature]

[NPL 1]
Daisei Uchida, et al., "Tanmatsu ko-mitsudo/shahei kankyo de no ko-shuhasu-tai bunsan antena sisutemu no ichi-kento" [Study of high-frequency-band distributed antenna system in terminal high-density/shielded environment], Proceedings of the IEICE General Conference, Communication 1, B-5-87, p. 375, March 2020

### [Summary of Invention]

### [Technical Problem]

In a distributed antenna system, multiple antennas are arranged to be distributed in a wireless communication area. For this reason, the propagation delay offset for radio signals in the case in which multiple antennas execute coherent joint transmission is large in comparison with the propagation delay offset for radio signals in coherent transmission between a single base station and a single terminal.

The greater the propagation delay offset is, the higher the possibility of occurrence of inter-symbol interference becomes, and the communication quality for reception is degraded. In this way, in distributed antenna systems, there is a problem in that degradations in communication quality due to inter-symbol interference cannot be suppressed.

In view of the above-mentioned circumstances, an objective of the present invention is to provide a communication control method and a distributed antenna system that can suppress degradations in communication quality due to inter-symbol interference.

### [Solution to Problem]

One embodiment of the present invention is a communication control method to be executed by a distributed antenna system for controlling coherent transmission between a terminal, which communicates with one or more signal processing apparatus or a higher-level signal processing apparatus through multiple distributed antennas that execute coherent joint transmission, and the multiple distributed antennas, wherein the communication control method includes: a step of estimating, for each distributed antenna among the multiple distributed antennas, a propagation delay offset in the terminal for propagation from the one or more signal processing apparatus or the higher-level signal processing apparatus to the terminal in accordance with a propagation delay from the one or more signal processing apparatus or the higher-level signal processing apparatus to the terminal, or a propagation delay offset in the terminal for propagation from the multiple distributed antennas to the terminal in accordance with a propagation delay from the one or more signal processing apparatus or the higher-level signal processing apparatus to the multiple distributed antennas and a propagation delay from the multiple distributed antennas to the terminal; and a step of controlling a transmission timing for each distributed antenna so that the propagation delay offset estimated for each distributed antenna is less than or equal to a tolerable delay offset.

One embodiment of the present invention is a distributed antenna system for controlling coherent transmission between a terminal, which communicates with one or more signal processing apparatus or the higher-level signal processing apparatus through multiple distributed antennas that execute coherent joint transmission, and the multiple distributed antennas, wherein the distributed antenna system comprises: an estimation unit that estimates, for each distributed antenna among the multiple distributed antennas, a propagation delay offset in the terminal for propagation from the one or more signal processing apparatus or the higher-level signal processing apparatus to the terminal in accordance with a propagation delay from the one or more signal processing apparatus or the higher-level signal processing apparatus to the terminal, or a propagation delay offset in the terminal for propagation from the multiple distributed antennas to the terminal in accordance with a propagation delay from the one or more signal processing apparatus or the higher-level signal processing apparatus to the multiple distributed antennas and a propagation delay from the multiple distributed antennas to the terminal; and a control unit that controls a transmission timing for each distributed antenna so that the propagation delay offset estimated for each distributed antenna is less than or equal to a tolerable delay offset.

### [Advantageous Effects of Invention]

Due to the present invention, degradations in communication quality due to inter-symbol interference can be suppressed.

### [Brief Description of Drawings]

[FIG. 1] A diagram illustrating an example of a configuration of a distributed antenna system in a first embodiment.
[FIG. 2] A diagram illustrating an example of propagation delay offsets between signals received by a terminal in the first embodiment.
[FIG. 3] A flow chart indicating an example of operations in a communication control apparatus in the first embodiment.
[FIG. 4] A flow chart indicating an example of operations in a communication control apparatus in a modified example of the first embodiment.
[FIG. 5] A diagram illustrating an example of a configuration of a distributed antenna system in a second embodiment.
[FIG. 6] A diagram illustrating an example of a configuration of a distributed antenna system in a third embodiment.
[FIG. 7] A diagram illustrating an example of a configuration of a distributed antenna system in a fourth embodiment.
[FIG. 8] A sequence diagram indicating an example of operations in the distributed antenna system in the fourth embodiment.
[FIG. 9] A diagram illustrating an example of a configuration of a distributed antenna system in a fifth embodiment.
[FIG. 10] A sequence diagram indicating an example of operations in the distributed antenna system in the fifth embodiment.
[FIG. 11] A diagram illustrating an example of a configuration of a distributed antenna system in a sixth embodiment.
[FIG. 12] A sequence diagram indicating an example of operations in the distributed antenna system in the sixth embodiment.
[FIG. 13] A diagram illustrating an example of a configuration of a distributed antenna system in a seventh embodiment.
[FIG. 14] A sequence diagram indicating an example of operations in the distributed antenna system in the seventh embodiment.
[FIG. 15] A diagram illustrating an example of a hardware configuration of a communication apparatus in the respective embodiments.
[FIG. 16] A diagram illustrating an example of a configuration of a distributed antenna system.
[FIG. 17] A sequence diagram indicating an example of operations in the distributed antenna system.

### [Description of Embodiments]

Embodiments of the present invention will be explained in detail with reference to the drawings.

### (First Embodiment)

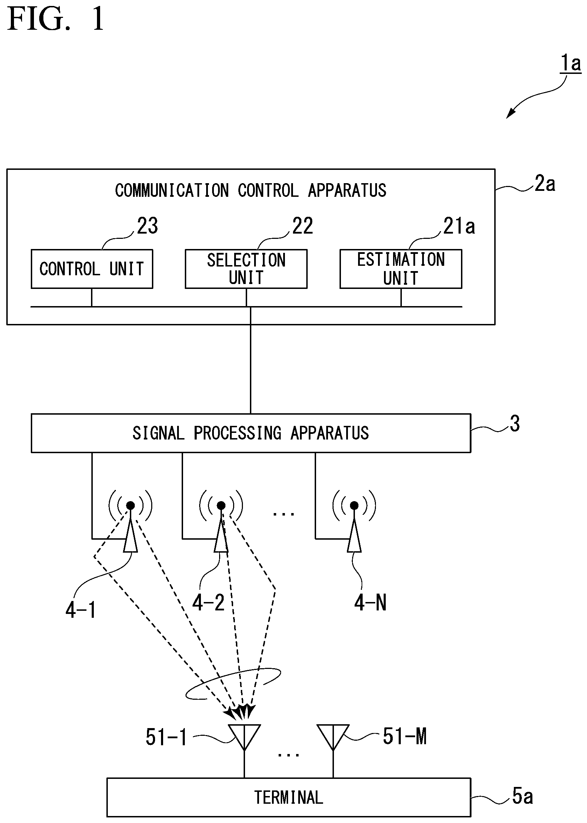

FIG. 1 is a diagram illustrating an example of a configuration of a distributed antenna system 1a in a first embodiment. The distributed antenna system 1a is a system in which a base station provided with a signal processing apparatus and a terminal in a wireless communication area communicate by using multiple antennas distributed in that wireless communication area. In wireless communication, there may be waves that are delayed with respect to direct waves due to multipath of reflected waves or the like.

The distributed antenna system 1a is provided with a communication control apparatus 2a, a signal processing apparatus 3, N (where N is an integer greater than or equal to 2) distributed antennas 4, and one or more terminals 5a. The communication control apparatus 2a is provided with an estimation unit 21a, a selection unit 22, and a control unit 23. The terminal 5a is provided with M (where M is an integer greater than or equal to 1) terminal antennas 51.

The communication control apparatus 2a and the signal processing apparatus 3 are provided in a base station. The communication control apparatus 2a and the signal processing apparatus 3 can communicate by wire. The signal processing apparatus 3 and the respective distributed antennas 4 can communicate by wire. The respective distributed antennas 4 and the terminal 5a can communicate wirelessly in a wireless section.

The N distributed antennas 4 are arranged to be distributed in a prescribed wireless communication area. The terminal 5a is located in that wireless communication area. The terminal 5a can use the one or more distributed antennas 4 to communicate with the communication control apparatus 2a and the signal processing apparatus 3.

The estimation unit 21a or the terminal 5a uses a propagation delay offset estimation method to estimate, for each distributed antenna 4, the propagation delay offset in the terminal 5a for propagation from the signal processing apparatus 3 to the terminal 5a in accordance with the propagation delay (propagation time) from the signal processing apparatus 3 to the terminal 5a. This estimation method is not limited to a specific estimation method. Multiple examples of estimation methods in the distributed antenna system will be described below in the respective embodiments from the fourth embodiment to the seventh embodiment.

The selection unit 22 selects a terminal 5a for receiving a coherently transmitted radio signal (data signal) from among one or more terminals 5a. Additionally, the selection unit 22 selects multiple distributed antennas 4 from among the N distributed antennas 4.

In this case, the selection unit 22 selects multiple distributed antennas 4 so as to maximize the total system capacity of all of the terminals 5a in the distributed antenna system 1a. For example, the selection unit 22 may select the multiple distributed antennas 4 by using propagation channel information so that the Shannon capacity becomes large. The selection unit 22 may preferentially select multiple distributed antennas 4 for which the reception power is large relative to the interference power and the noise power, such as the carrier-to-interference-plus-noise power ratio (CINR) or the signal-to-interference-plus-noise power ratio (SINR). The selection unit 22 may preferentially select multiple distributed antennas 4 for which the reception power is large. Additionally, the selection unit 22 may preferentially select, from among the N distributed antennas 4 to which the signal processing apparatus 3 is connected, multiple distributed antennas 4 for which delay diversity effects are obtained.

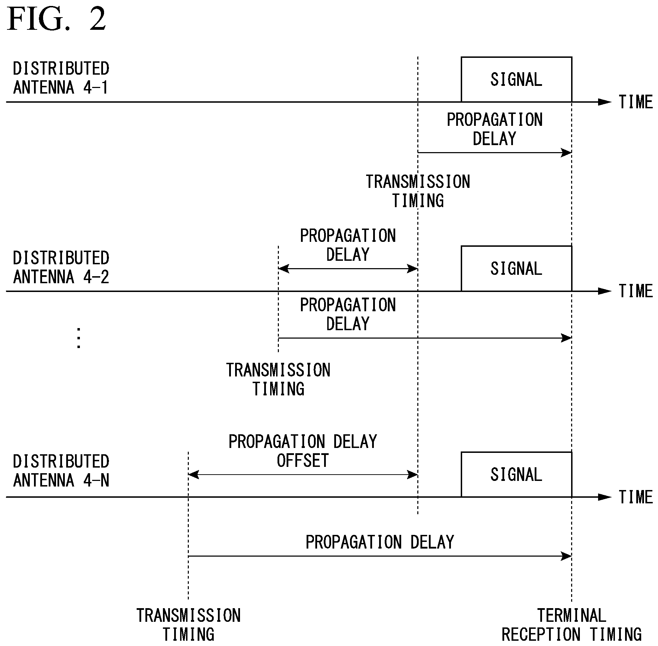

FIG. 2 is a diagram illustrating an example of the propagation delay offsets between signals received by the terminal 5a in the first embodiment. In FIG. 2, the selection unit 22 selects, from among N distributed antennas 4, multiple distributed antennas 4 including the distributed antenna 4-1, the distributed antenna 4-2, and the distributed antenna 4-N. The estimation unit 21a or the terminal 5a estimates, for each distributed antenna 4, the propagation delay offset in the terminal 5a for propagation from the signal processing apparatus 3 to the terminal 5a in accordance with the propagation delay (propagation time) from the signal processing apparatus 3 to the terminal 5a.

The control unit 23 controls the transmission timings of the signals for each distributed antenna 4 among the multiple distributed antennas 4 that have been selected so that the estimated propagation delay offset for each distributed antenna 4 is less than or equal to the tolerable delay offset at the terminal 5a. For example, the control unit 23 may control the transmission timings of signals for each distributed antenna 4 among the multiple distributed antennas 4 that have been selected so that the estimated propagation delay offset for each distributed antenna 4 is eliminated at the terminal 5a (so that the multiple radio signals are simultaneously received in the terminal 5a at the terminal reception timing). For example, the control unit 23 may shift the transmission timings of the signals for each distributed antenna 4 among the multiple distributed antennas 4 that have been selected so that a propagation delay offset, which is estimated for each distributed antenna 4, is intentionally slightly introduced at the terminal 5a (so that the terminal reception timings of the multiple radio signals differ for each distributed antenna 4 within a range less than or equal to the tolerable delay time offset). As a result thereof, delay diversity effects can be obtained. The transmission timings of the signals may be the transmission timings of wired signals in the signal processing apparatus 3 or may be transmission timings of radio signals in the distributed antennas 4.

Returning to FIG. 1, the explanation of the example of the configuration of the distributed antenna system 1a will be continued. The control unit 23 controls the operations (for example, the transmission timings of the signals) of the signal processing apparatus 3 so that the multiple distributed antennas 4 that have been selected coherently transmit radio signals to the terminal 5a.

The signal processing apparatus 3 (digital and analog signal processing apparatus) outputs electrical signals (analog signals) to the multiple distributed antennas 4 that have been selected at transmission timings controlled by the control unit 23. The multiple distributed antennas 4 coherently transmit radio signals in accordance with the electrical signals. The terminal 5a uses one or more terminal antennas 51 to receive the radio signals from the multiple distributed antennas 4.

Next, an example of operations in the communication control apparatus 2a will be explained.

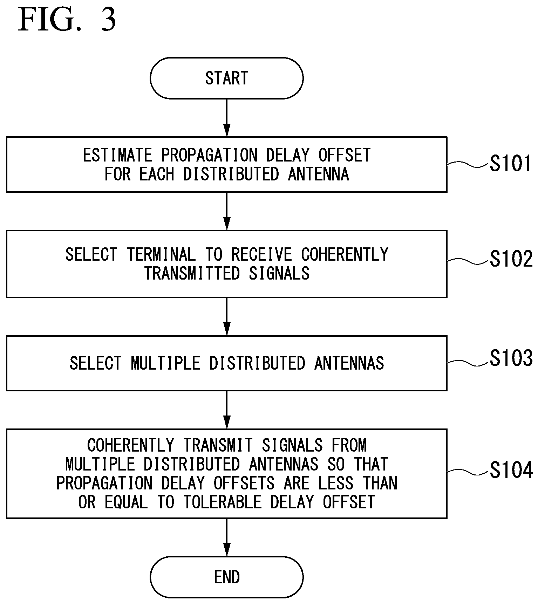

FIG. 3 is a flow chart indicating an example of operations in the communication control apparatus 2a in the first embodiment. The communication control apparatus 2a estimates the propagation delay offset in the respective terminals 5a in the distributed antenna system 1a, for each distributed antenna 4 among the N distributed antennas 4 (step S101). The communication control apparatus 2a selects one terminal 5a to receive coherently transmitted radio signals (data signals) from among one or more terminals 5a in the distributed antenna system 1a (step S102).

The communication control apparatus 2a selects the multiple distributed antennas 4 from among the N distributed antennas 4 (all of the distributed antennas 4) (step S103). The communication control apparatus 2a coherently transmits radio signals from the multiple distributed antennas 4 based on transmission timings that are controlled for each distributed antenna 4 so that the propagation delay offsets at the selected terminal 5a are less than or equal to the tolerable delay offset (step S104).

As described above, the communication control apparatus 2a (distributed antenna system) controls the coherent transmission between the one terminal 5a that has been selected and the multiple distributed antennas 4 executing coherent joint transmission.

The estimation unit 21a or the terminal 5a estimates, for each distributed antenna 4 among the multiple distributed antennas 4, the propagation delay offset in the terminal 5a for propagation from the signal processing apparatus 3 (digital signal processing apparatus) to the terminal 5a in accordance with the propagation delay (propagation time) from the signal processing apparatus 3 to the terminal 5a.

The control unit 23 controls the transmission timings of signals for each distributed antenna 4 so that the propagation delay offset estimated for each distributed antenna 4 is less than or equal to the tolerable delay offset. The control unit 23 may control the transmission timings of wired signals transmitted from the signal processing apparatus 3 or may control the transmission timings of radio signals transmitted from the distributed antennas 4. The control unit 23 and the signal processing apparatus 3 communicate with the terminal 5a using the multiple distributed antennas 4 that have been selected. The terminal 5a communicates with the communication control apparatus 2a and the signal processing apparatus 3 through the multiple distributed antennas 4 that have been selected.

As a result thereof, the propagation delay offsets become less than or equal to the tolerable delay offset, thereby allowing degradations in communication quality due to inter-symbol interference to be suppressed. Additionally, in the case in which the transmission timings of the radio signals are controlled for each distributed antenna 4 so that propagation delay offsets intentionally occur in the terminal 5a within a range less than or equal to the tolerable delay offset, delay diversity effects are obtained.

### (Modified Example of First Embodiment)

In the first embodiment described above, the propagation delay offset is estimated for each distributed antenna 4 among the N distributed antennas 4. In contrast therewith, in the modified example of the first embodiment, the main difference from the first embodiment is that the propagation delay offset is estimated for each distributed antenna 4 among the multiple distributed antennas 4 that have been selected. The modified example of the first embodiment will be explained by focusing on the differences from the first embodiment.

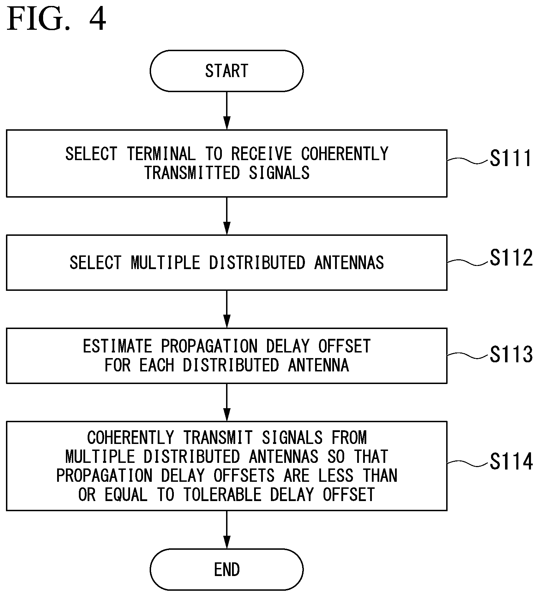

FIG. 4 is a flow chart indicating an example of operations in the communication control apparatus 2a in the modified example of the first embodiment. The communication control apparatus 2a selects one terminal 5a that is to receive coherently transmitted radio signals (data signals) from among one or more terminals 5a in the distributed antenna system 1a (step S111). The communication control apparatus 2a selects multiple distributed antennas 4 from among N distributed antennas 4 (all of the distributed antennas 4) (step S112).

The communication control apparatus 2a estimates, for each distributed antenna 4 among the multiple distributed antennas 4 that have been selected, the propagation delay offset in the one terminal 5a that has been selected (step S113). The communication control apparatus 2a coherently transmits radio signals from the multiple distributed antennas 4, based on transmission timings controlled so that the propagation delay offsets at the selected terminal 5a will be less than or equal to the tolerable delay offset (step S114).

### (Second Embodiment)

In the second embodiment, the main difference from the first embodiment is that the signal processing apparatus 3 and the respective distributed antennas 4 can communicate by using radio over fiber (RoF). The second embodiment will be explained by focusing on the differences from the first embodiment.

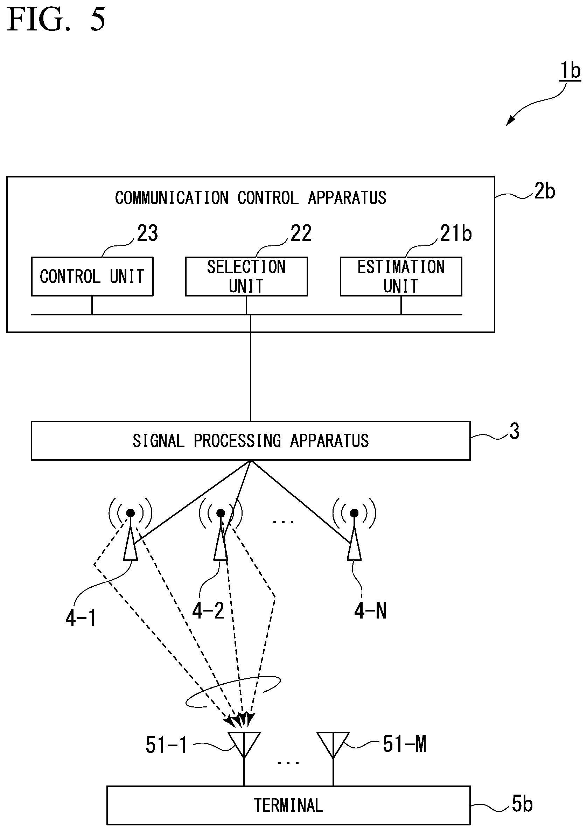

FIG. 5 is a diagram illustrating an example of a configuration of a distributed antenna system 1b in the second embodiment. The signal processing apparatus 3 and the respective distributed antennas 4 can communicate by using radio over fiber (RoF). That is, the signal processing apparatus 3 and the respective distributed antennas 4 can communicate by wire using optical signals propagating through optical fibers in a RoF section (wired section).

In the RoF section, optical signals propagate through the cores of the optical fibers. Since the loss in optical signals is smaller than the loss in radio signals, the distributed antennas 4 can be extended from the signal processing apparatus 3 to distant positions. In this case, since the lengths of the optical fibers differ for each distributed antenna 4, there is a possibility that the propagation delay offsets in the optical signals will become large in the RoF section. For this reason, the estimation unit 21b or the terminal 5b estimates the propagation delay offsets of the respective radio signals arriving at the terminal 5b by taking into account the propagation delay (propagation time) of the respective optical signals in the RoF section.

In the case in which the estimation unit 21b or the terminal 5b has estimated, for example, the propagation delay offset in the section between the signal processing apparatus 3 and the terminal 5b (the propagation delay offset taking into account the propagation delay (propagation time) in the RoF section), the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4.

In the case in which the estimation unit 21b or the terminal 5b has estimated, for example, the propagation delay offset in the wireless section between the distributed antennas 4 and the terminal 5b (the propagation delay offset not taking into account the propagation delay (propagation time) in the RoF section), the selection unit 22 controls the transmission timing for each distributed antenna 4 so that the propagation delay offset estimated for each distributed antenna 4 is less than or equal to the tolerable delay offset based on the propagation delay offset taking into account the propagation delay (propagation time) in the RoF section, which has been measured in advance.

As explained above, the communication control apparatus 2b (distributed antenna system) controls coherent transmission between the one terminal 5b that has been selected and the multiple distributed antennas 4 executing coherent joint transmission.

The estimation unit 21b or the terminal 5b estimates, for each distributed antenna 4, the propagation delay offset in the terminal 5b for propagation from the signal processing apparatus 3 to the terminal 5b in accordance with the propagation delay from the signal processing apparatus 3 to the terminal 5b (the propagation delay (propagation time) in a section including the RoF section).

The estimation unit 21b or the terminal 5b may estimate, for each distributed antenna 4, the propagation delay offset in the terminal 5b for propagation from the distributed antennas 4 to the terminal 5b in accordance with the propagation delay from the signal processing apparatus 3 to the distributed antenna 4 (the propagation delay measured in advance for each distributed antenna 4) and the propagation delay from the distributed antenna 4 to the terminal 5b (the wireless section). That is, the estimation unit 21b or the terminal 5b may estimate, for each distributed antenna 4, the propagation delay offset for propagation from the distributed antennas 4 to the terminal 5b (the wireless section) by also taking into account the propagation delay (propagation time) in the wired section from the signal processing apparatus 3 to the distributed antennas 4.

The control unit 23 controls the transmission timing for each distributed antenna 4 so that the propagation delay offset estimated for each distributed antenna 4 is less than or equal to the tolerable delay offset. The control unit 23 and the signal processing apparatus 3 use multiple distributed antennas 4 selected from among the multiple distributed antennas 4 to communicate with the terminal 5b. The terminal 5b communicates with the communication control apparatus 2b and the signal processing apparatus 3 through the multiple distributed antennas 4 that have been selected.

As a result thereof, degradations in communication quality due to inter-symbol interference can be suppressed. Additionally, in the case in which the transmission timings of the radio signals are controlled for each distributed antenna 4 so that propagation delay offsets intentionally occur in the terminal 5b within a range less than or equal to the tolerable delay offset, delay diversity effects are obtained.

### (Third Embodiment)

In the third embodiment, the main difference from the second embodiment is that the distributed antenna system is provided with a higher-level signal processing apparatus and multiple signal processing apparatuses 3. The third embodiment will be explained by focusing on the differences from the second embodiment.

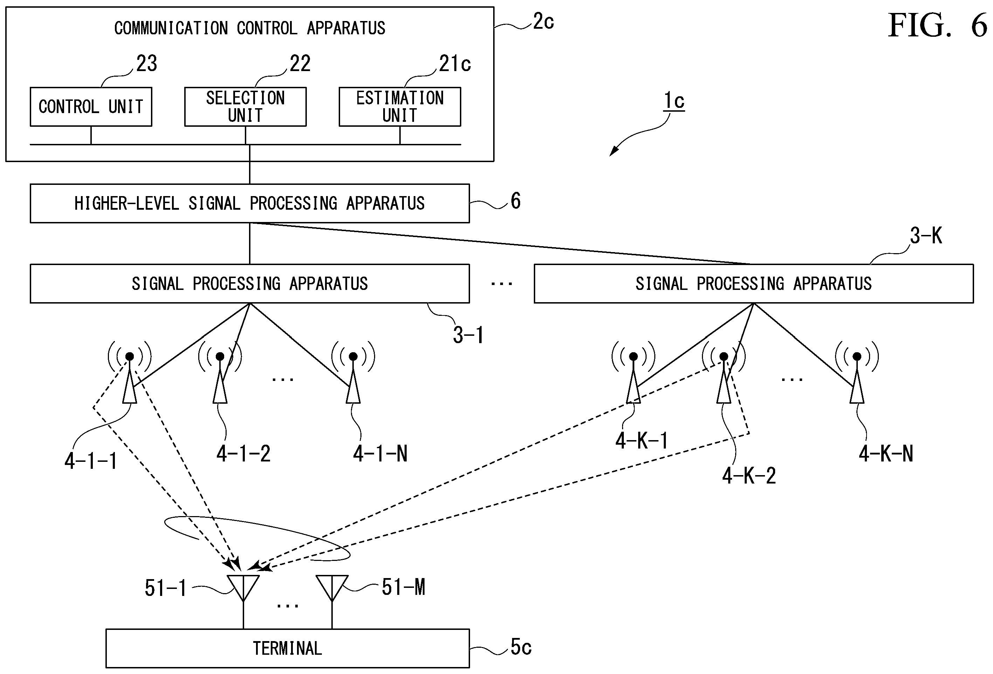

FIG. 6 is a diagram illustrating an example of a configuration of a distributed antenna system 1c in the third embodiment. The distributed antenna system 1c is provided with a communication control apparatus 2c, K (where K is an integer greater than or equal to 2) signal processing apparatuses 3, N distributed antennas 4, and one or more terminals 5c. The communication control apparatus 2c is provided with an estimation unit 21c, a selection unit 22, and a control unit 23. The terminal 5c is provided with M terminal antennas 51.

The distributed antenna system 1c may be provided with a higher-level signal processing apparatus 6 (signal aggregation apparatus) at a level higher than the signal processing apparatuses 3. In the case in which the distributed antenna system 1c is provided with a higher-level signal processing apparatus 6, the K signal processing apparatuses 3 are connected to the higher-level signal processing apparatus 6 by using, for example, optical fibers. In the case in which the distributed antenna system 1c is not provided with a higher-level signal processing apparatus 6, the K signal processing apparatuses 3 are connected to the communication control apparatus 2c by using, for example, optical fibers. Hereinafter, the distributed antenna system 1c is provided with a higher-level signal processing apparatus 6.

The communication control apparatus 2c, the respective signal processing apparatuses 3, and the higher-level signal processing apparatus 6 are provided in a base station. The communication control apparatus 2c and the respective signal processing apparatuses 3 can communicate by wire in a wired section. The respective signal processing apparatuses 3 and the higher-level signal processing apparatus 6 can communicate by wire in a wired section (rear wired section) with optical fibers or the like. The signal processing apparatuses 3 and the respective distributed antennas 4 subordinate thereto can communicate by wire in the wired section. The respective distributed antennas 4 and the terminal 5c can communicate wirelessly in the wireless section.

The N distributed antennas 4 are arranged to be distributed in a prescribed wireless communication area. The terminal 5c is located in that wireless communication area. The terminal 5c can use the multiple signal processing apparatuses 3 and the multiple distributed antennas 4 to communicate with the communication control apparatus 2c and the higher-level signal processing apparatus 6.

The higher-level signal processing apparatus 6 is a signal processing apparatus (digital signal processing apparatus) at a higher level than the signal processing apparatuses 3. The higher-level signal processing apparatus 6 executes prescribed digital signal processing so that multiple distributed antennas 4 that have been selected execute coherent joint transmission. The higher-level signal processing apparatus 6 outputs, to the subordinate signal processing apparatuses 3, digital signals generated by the digital signal processing.

The signal processing apparatuses 3 convert the digital signals output from the higher-level signal processing apparatus 6 to analog signals. The signal processing apparatuses 3 output the converted analog signals to the respective subordinate distributed antennas 4.

In the wired section with optical fibers or the like, the propagation delay offsets between optical signals can become large. For this reason, the estimation unit 21c or the terminal 5c estimates the propagation delay offsets in radio signals that have arrived at the terminal 5c by taking into account the propagation delay (propagation time) of signals in the wired section.

In the case in which the estimation unit 21c or the terminal 5c has estimated, for example, the propagation delay offset in the section between the signal processing apparatuses 3 and the terminal 5c (the propagation delay offset taking into account the propagation delay (propagation time) in the wired section), the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4.

In the case in which the estimation unit 21c or the terminal 5c has estimated, for example, the propagation delay offset in the wireless section between the distributed antennas 4 and the terminal 5c (the propagation delay offset not taking into account the propagation delay (propagation time) in the wired section), the control unit 23 may control the transmission timing of each distributed antenna 4 so that the propagation delay offset estimated for each distributed antenna 4 is less than or equal to the tolerable delay offset based on the propagation delay offset taking into account the propagation delay (propagation time) in the wired section, which has been measured in advance.

As described above, the communication control apparatus 2c (distributed antenna system) controls coherent transmission between the one terminal 5c that has been selected and the multiple distributed antennas 4 that execute coherent joint transmission.

The estimation unit 21c or the terminal 5c estimates, for each distributed antenna 4, the propagation delay offset in the terminal 5c for propagation from the one or more signal processing apparatuses 3 or the higher-level signal processing apparatus 6 to the terminal 5c in accordance with the propagation delay from the one or more signal processing apparatuses 3 or the higher-level signal processing apparatus 6 to the terminal 5c (the propagation delay (propagation time) in a section including the wired section).

The estimation unit 21c or the terminal 5c may estimate, for each distributed antenna 4 , the propagation delay offset in the terminal 5c for propagation from the distributed antennas 4 to the terminal 5c in accordance with the propagation delay from the one or more signal processing apparatuses 3 or the higher-level signal processing apparatus 6 to the distributed antenna 4 (the propagation delay measured in advance for each distributed antenna 4) and the propagation delay (propagation time) from the distributed antenna 4 to the terminal 5c (the wireless section). That is, the estimation unit 21c or the terminal 5c may estimate, for each distributed antenna 4, the propagation delay offset for propagation from the distributed antennas 4 to the terminal 5c (the wireless section) by also taking into account the propagation delay (propagation time) in the wired section from the one or more signal processing apparatuses 3 or the higher-level signal processing apparatus 6 to the distributed antennas 4.

The control unit 23 controls the transmission timing for each distributed antenna 4 so that the propagation delay offset estimated for each distributed antenna 4 is less than or equal to the tolerable delay offset. The control unit 23 and the higher-level signal processing apparatus 6 use multiple distributed antennas 4 selected from among the multiple distributed antennas 4 to communicate with the terminal 5c. The terminal 5c communicates with the communication control apparatus 2c and the higher-level signal processing apparatus 6 through the multiple distributed antennas 4 that have been selected.

As a result thereof, degradations in communication quality due to inter-symbol interference can be suppressed. Additionally, in the case in which the transmission timings of the radio signals are controlled for each distributed antenna 4 so that propagation delay offsets intentionally occur in the terminal 5c within a range less than or equal to the tolerable delay offset, delay diversity effects are obtained.

### (Fourth Embodiment)

In the respective embodiments from the first embodiment to the third embodiment described above, the communication control apparatus may use known signals transmitted from a terminal to estimate the propagation delay offsets. The fourth embodiment will be explained by focusing on the differences from the first embodiment serving as an example of the first embodiment to the third embodiment described above.

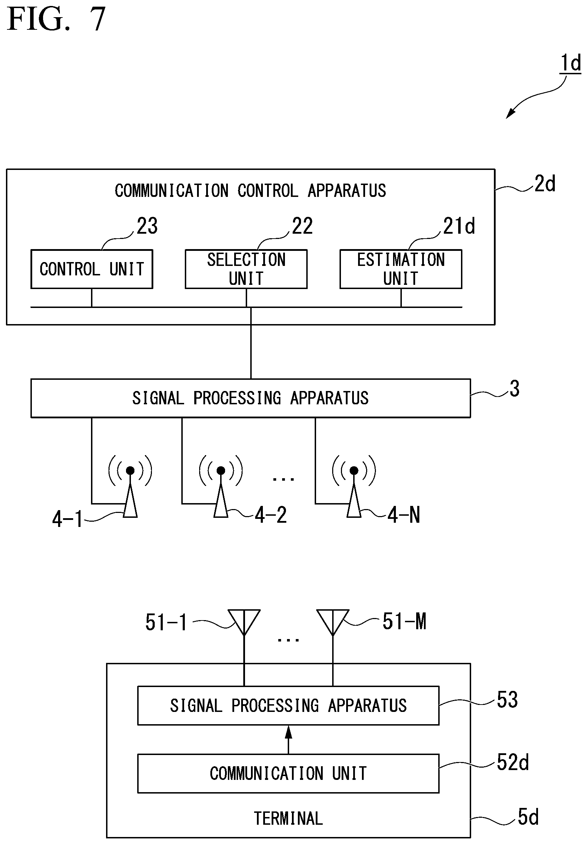

FIG. 7 is a diagram illustrating an example of a configuration of a distributed antenna system 1d in the fourth embodiment. The distributed antenna system 1d is provided with a communication control apparatus 2d, a signal processing apparatus 3, N distributed antennas 4, and one or more terminals 5d. The communication control apparatus 2d is provided with an estimation unit 21d, a selection unit 22, and a control unit 23. The terminal 5d is provided with M terminal antennas 51, a communication unit 52d, and a signal processing apparatus 53. The terminal 5d and the signal processing apparatus 53 may be separate elements.

The communication unit 52d uses the signal processing apparatus 53 and the M terminal antennas 51 to transmit known signals at predetermined transmission timings (transmission timings). In this case, the communication unit 52d may transmit the known signals using different time resources for each distributed antenna 4. The communication unit 52d may transmit the known signals using different frequency resources for each distributed antenna 4. The communication unit 52d may transmit the known signals using different coding for each distributed antenna 4.

The signal processing apparatus 53 converts the known signals (digital signals) output from the communication unit 52d to analog signals. The signal processing apparatus 3 outputs the analog signals to one or more terminal antennas 51.

The estimation unit 21d estimates the propagation delay offsets based on the offsets between scheduled timings (timings that have been scheduled beforehand) at which the known signals were to be received by the distributed antennas 4 and the actual timings at which the known signals were received at the distributed antennas 4. The estimation unit 21d may estimate the propagation delay offsets at the distributed antennas 4 in accordance with fluctuations or the like in the delay for the known signals transmitted multiple times.

For example, the communication unit 52d transmits respective known signals and the estimation unit 21d estimates the cross-correlation between the respective known signals that have been received, and the estimation unit 21d thereby estimates the actual timings at which the respective known signals were received (the timings of actual reception).

For example, with a known signal having periodicity such as a signal to which a guard interval has been added, the estimation unit 21d estimates the actual timings at which the known signals were received, by estimating the auto-correlation between the known signals. The guard interval may be a cyclic prefix (CP) in which a duplicated signal is added, or may be a waveform signal transmitted in a time period during which data signals are not transmitted.

For example, the estimation unit 21d estimates the actual timings at which the known signals were received based on delay profiles estimated by using the known signals. In this case, the estimation unit 21d acquires the delay profiles, for example, by executing inverse fast Fourier transforms (IFFTs) on propagation channels in the frequency direction. In this case, the actual timings at which the known signals were received (the timings of actual reception) may be the actual timings of reception of the known signals that propagated on a path for which the highest reception power was obtained, or may be median values of the actual timings of reception of the known signals that propagated on the respective paths in which propagation delay offsets occurred. Additionally, the actual timings at which the known signals were received may be weighted average values obtained by weighting, with the magnitudes of the reception powers of the known signals, the actual timings of reception of the known signals that propagated on the paths in which propagation delay offsets occurred.

The scheduled timings at which the known signals are received may be scheduled timings of reception of known signals that are periodically transmitted, scheduled timings of reception of known signals that are periodically transmitted only a designated number of times based on triggers in the communication control apparatus 2d or the terminal 5d, or scheduled timings of reception of known signals transmitted just once based on triggers in the communication control apparatus or the terminal.

In the case in which the estimation unit 21d has estimated the propagation delay offsets in the section between the signal processing apparatus 3 and the terminal 5d, the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4. The same applies to the second embodiment or the third embodiment.

In the case in which the estimation unit 21d has estimated the propagation delay offsets in the wireless section between the distributed antennas 4 and the terminal 5d, the control unit 23 may control the transmission timing for each distributed antenna 4 so that the propagation delay offset estimated for each distributed antenna 4 is less than or equal to the tolerable delay offset based on the propagation delay offset taking into account the propagation delay (propagation time) in the wired section, which has been measured in advance. The same applies to the second embodiment or the third embodiment.

Next, an example of operations in the distributed antenna system 1d will be explained.

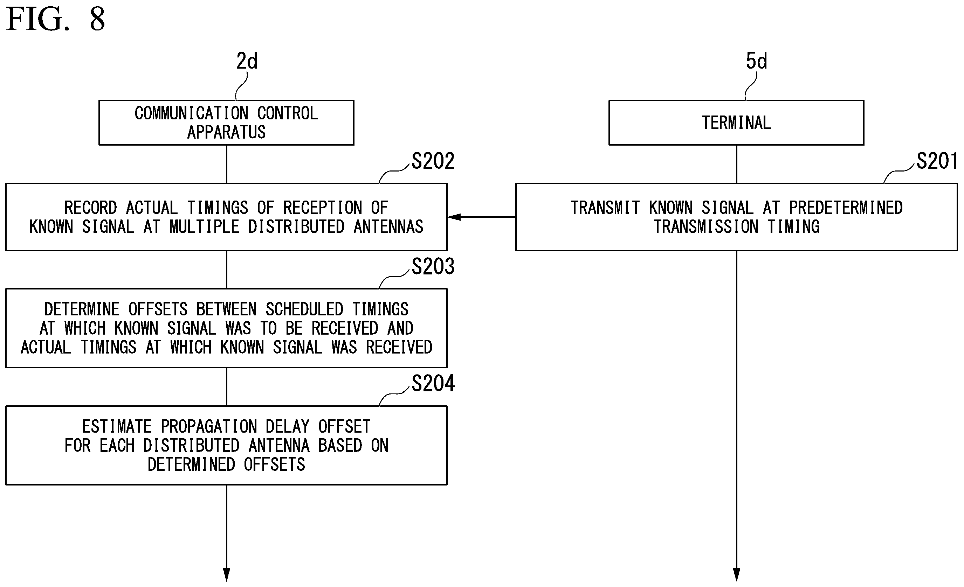

FIG. 8 is a sequence diagram indicating an example of operations in the distributed antenna system 1d in the fourth embodiment. The terminal 5d transmits a known signal at a predetermined transmission timing (transmission timing) (step S201).

The communication control apparatus 2d records the actual timings at which the known signal was received at multiple distributed antennas (step S202). The communication control apparatus 2d determines (calculates) the offsets between the scheduled timings at which the known signal was to be received and the actual timings at which the known signal was received (step S203). The communication control apparatus 2d estimates the propagation delay offset for each distributed antenna based on the offsets that were determined (step S204).

As indicated above, in the respective embodiments from the first embodiment to the third embodiment described above, the estimation unit 21d estimates propagation delay offsets based on the offsets between scheduled timings at which known signals were to be received and the actual timings at which the known signals were received. As a result thereof, degradations in communication quality due to inter-symbol interference can be suppressed.

### (Fifth Embodiment)

In the respective embodiments from the first embodiment to the third embodiment described above, the terminal may use known signals transmitted from the communication control apparatus to estimate the propagation delay offsets. The fifth embodiment will be explained by focusing on the differences from the first embodiment serving as an example of the first embodiment to the third embodiment described above.

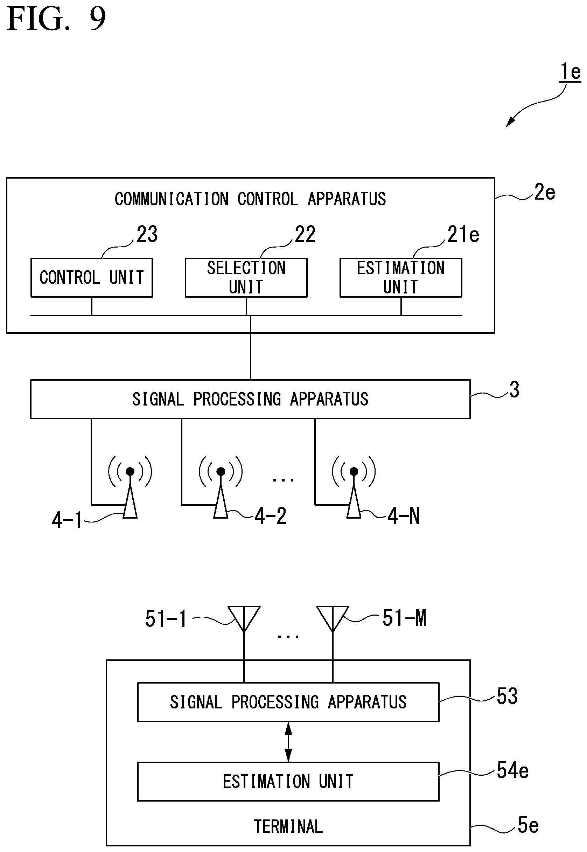

FIG. 9 is a diagram illustrating an example of a configuration of a distributed antenna system 1e in the fifth embodiment. The distributed antenna system 1e is provided with a communication control apparatus 2e, a signal processing apparatus 3, N distributed antennas 4, and one or more terminals 5e. The communication control apparatus 2e is provided with an estimation unit 21e, a selection unit 22, and a control unit 23. The terminal 5e is provided with M terminal antennas 51, a signal processing apparatus 53, and an estimation unit 54e. The terminal 5e and the signal processing apparatus 53 may be separate elements.

The estimation unit 21e uses the signal processing apparatus 3 to transmit known signals from multiple distributed antennas 4 at predetermined transmission timings. In this case, the estimation unit 21e may transmit the known signals using different time resources for each distributed antenna 4. The estimation unit 21e may transmit the known signals using different frequency resources for each distributed antenna 4. The estimation unit 21e may transmit the known signals using different coding for each distributed antenna 4. When a signal representing the propagation delay offset for each distributed antenna 4 has been acquired from the terminal 5e, the estimation unit 21e records the propagation delay offset for each distributed antenna 4.

The estimation unit 54e records the actual timings at which the known signals were received at the terminal antennas 51. The estimation unit 54e determines (calculates) the offsets between scheduled timings at which the known signals were to be received and actual timings at which the known signals were received. The estimation unit 54e estimates the propagation delay offsets based on the offsets between scheduled timings at which the known signals were to be received and the actual timings at which the known signals were received. The estimation unit 54e uses the terminal antennas 51 to transmit a signal representing the propagation delay offset for each distributed antenna 4 to the estimation unit 21e. That is, the estimation unit 54e feeds back the propagation delay offset for each distributed antenna 4 to the estimation unit 21e.

In the case in which the distributed antennas 4 that are to execute coherent joint transmission have been selected, the estimation unit 54e may feed back the propagation delay offsets at the terminal 5e for propagation between the distributed antennas 4 and the terminal 5e for the distributed antennas 4 that were selected. In the case in which the distributed antennas 4 that are to execute coherent joint transmission have not been selected, the estimation unit 54e may feed back, for all of the distributed antennas 4, the propagation delay offsets at the terminal 5e for propagation between the distributed antennas 4 and the terminal 5e.

The signal representing the propagation delay offset for each distributed antenna 4 (the signal used for feedback) is not limited to being a specific uplink signal. For example, the signal representing the propagation delay offsets may be a higher-layer data signal or may be a signal in a prescribed format in which propagation delay offset information can be carried. For example, the signal representing the propagation delay offsets may be on a physical uplink shared channel (PUSCH), may be a sounding reference signal (SRS), or may be on a physical uplink control channel (PUCCH). For example, the signal representing the propagation delay offsets may be a data frame or may be a frame dedicated to carrying propagation delay offset information.

In the case in which the estimation unit 54e has estimated the propagation delay offsets in the section between the signal processing apparatus 3 and the terminal 5e, the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4. The same applies to the second embodiment and the third embodiment.

In the case in which the estimation unit 54e has estimated the propagation delay offsets in the wireless section between the distributed antennas 4 and the terminal 5e, the control unit 23 may control the transmission timing for each distributed antenna 4 so that the propagation delay offset estimated for each distributed antenna 4 is less than or equal to the tolerable delay offset based on the propagation delay offset taking into account the propagation delay (propagation time) in the wired section, which has been measured in advance. The same applies to the second embodiment and the third embodiment.

Next, an example of operations in the distributed antenna system 1e will be explained.

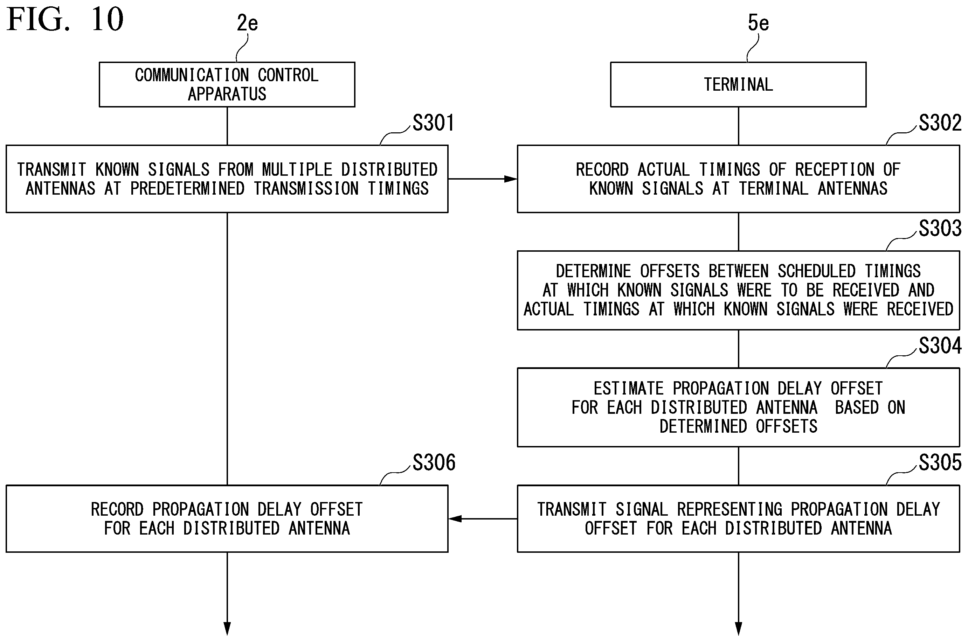

FIG. 10 is a sequence diagram indicating an example of operations in the distributed antenna system 1e in the fifth embodiment. The communication control apparatus 2e transmits known signals from the multiple distributed antennas 4 at predetermined transmission timings (step S301).

The terminal 5e records the actual timings at which the known signals were received at the terminal antennas 51 (step S302). The terminal 5e determines (calculates) the offsets between scheduled timings at which the known signals were to be received and the actual timings at which the known signals were received (step S303). The terminal 5e estimates the propagation delay offset for each distributed antenna 4 based on the determined offsets (step S304). The terminal 5e transmits a signal representing the propagation delay offset for each distributed antenna 4 (step S305). The communication control apparatus 2e records the propagation delay offset for each distributed antenna 4 (step S306).

As indicated above, in the respective embodiments from the first embodiment to the third embodiment described above, the estimation unit 54e estimates propagation delay offsets based on the offsets between scheduled timings at which known signals were to be received and the actual timings at which the known signals were received. As a result thereof, degradations in communication quality due to inter-symbol interference can be suppressed.

### (Sixth Embodiment)

In the respective embodiments from the first embodiment to the third embodiment described above, a signal bearing transmission timing information may be transmitted from a terminal and a communication control apparatus that is timing-synchronized with the terminal may use the transmission timing information to estimate the propagation delay offsets. The sixth embodiment will be explained by focusing on the differences from the first embodiment serving as an example of the first embodiment to the third embodiment described above.

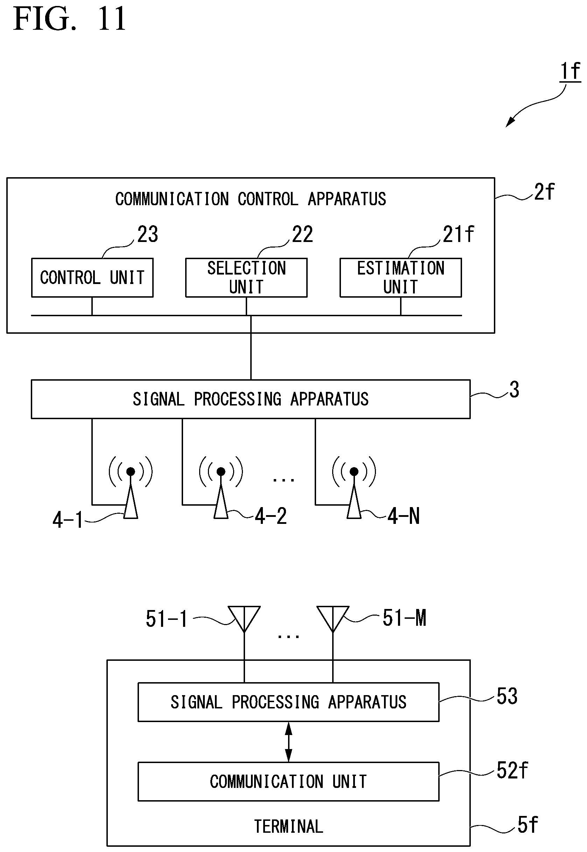

FIG. 11 is a diagram illustrating an example of a configuration of a distributed antenna system 1f in the sixth embodiment. The distributed antenna system 1f is provided with a communication control apparatus 2f, a signal processing apparatus 3, N distributed antennas 4, and one or more terminals 5f. The communication control apparatus 2f is provided with an estimation unit 21f, a selection unit 22, and a control unit 23. The terminal 5f is provided with M terminal antennas 51, a communication unit 52f, and a signal processing apparatus 53. The terminal 5f and the signal processing apparatus 53 may be separate elements.

The estimation unit 21f uses the signal processing apparatus 3 to transmit a request signal from at least one of the distributed antennas 4. The estimation unit 21f records the actual timings at which a signal bearing transmission timing information was received by the multiple distributed antennas 4. The estimation unit 21f determines (calculates) the offsets between the transmission timing indicated by the transmission timing information of the signal bearing the transmission timing information and the actual timings at which the signal bearing the transmission timing information was received. The estimation unit 21f estimates the propagation delay offset for each distributed antenna 4 based on the determined offsets.

In the case in which a request signal has been acquired, the communication unit 52f transmits a signal bearing transmission timing information to the multiple distributed antennas 4. This transmission timing information represents the timing at which the signal bearing the transmission timing information was transmitted by the signal processing apparatus 3 or the terminal antenna 51.

In the case in which the estimation unit 21f has estimated the propagation delay offsets in the section between the signal processing apparatus 3 and the terminal 5f (the propagation delay offsets taking into account the propagation delay (propagation time) in the wired section), the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4. The same applies to the second embodiment or the third embodiment.

In the case in which the estimation unit 21f has estimated the propagation delay offsets in the wireless section between the distributed antennas 4 and the terminal 5f (the propagation delay offsets not taking into account the propagation delay in the wired section), the control unit 23 may control the transmission timing for each distributed antenna 4 so that the propagation delay offset estimated for each distributed antenna 4 is less than or equal to the tolerable delay offset, based on the propagation delay offset taking into account the propagation delay in the wired section, which has been measured in advance. The same applies to the second embodiment or the third embodiment.

Next, an example of operations in the distributed antenna system 1f will be explained.

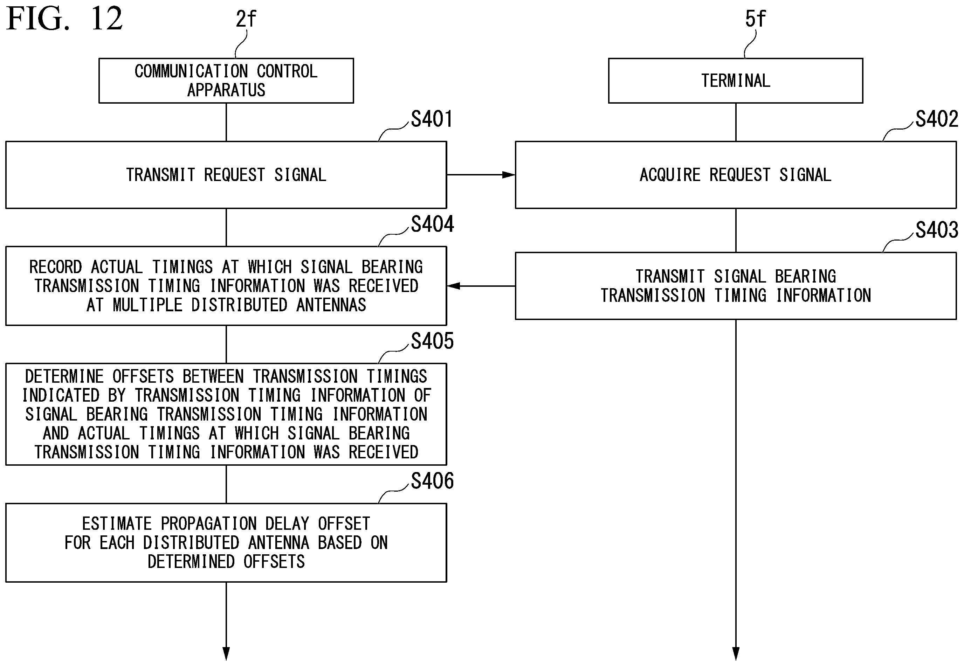

FIG. 12 is a sequence diagram indicating an example of operations in the distributed antenna system 1f in the sixth embodiment. The communication control apparatus 2f transmits a request signal (step S401). The terminal 5f acquires the request signal (step S402). The terminal 5f transmits a signal bearing transmission timing information (step S403).

The communication control apparatus 2f records the actual timing at which the signal bearing the transmission timing information was received at the multiple distributed antennas 4 (step S404). The communication control apparatus 2f determines (calculates) the offsets between the transmission timings indicated by the transmission timing information in the signal bearing the transmission timing information and the actual timings at which the signal bearing the transmission timing information was received (step S405). The communication control apparatus 2f estimates the propagation delay offset for each distributed antenna based on the determined offsets (step S406).

As described above, the estimation unit 21f estimates the propagation delay offsets based on offsets between the transmission timing indicated by the transmission timing information in the signal bearing the transmission timing information and the actual timings at which the signal bearing the transmission timing information was received. As a result thereof, degradations in communication quality due to inter-symbol interference can be suppressed.

### (Seventh Embodiment)

In the respective embodiments from the first embodiment to the third embodiment described above, signals bearing transmission timing information may be transmitted from a communication control apparatus, and a terminal that is timing-synchronized with the communication control apparatus may use the transmission timing information to estimate the propagation delay offsets. The seventh embodiment will be explained by focusing on the differences from the first embodiment serving as an example of the first embodiment to the third embodiment described above.

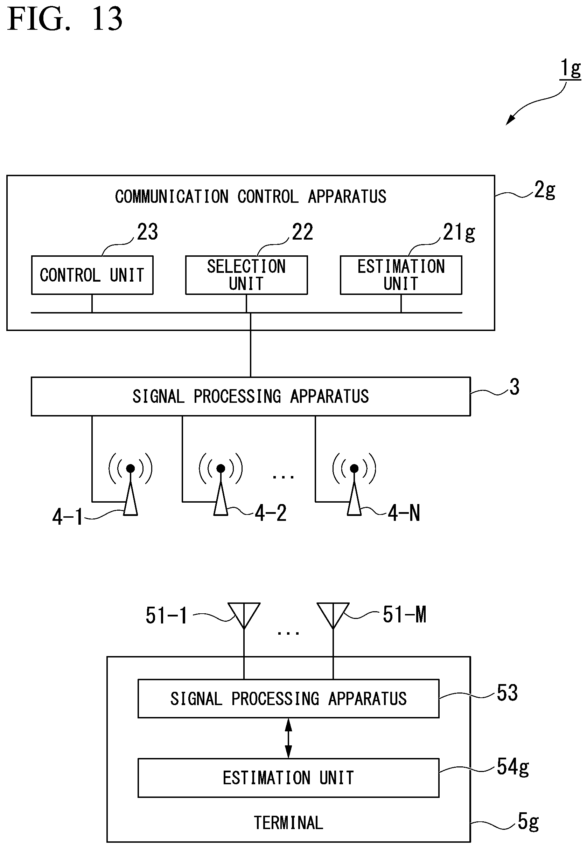

FIG. 13 is a diagram illustrating an example of a configuration of a distributed antenna system 1g in the seventh embodiment. The distributed antenna system 1g is provided with a communication control apparatus 2g, a signal processing apparatus 3, N distributed antennas 4, and one or more terminals 5g. The communication control apparatus 2g is provided with an estimation unit 21g, a selection unit 22, and a control unit 23. The terminal 5g is provided with M terminal antennas 51, a signal processing apparatus 53, and an estimation unit 54g. The terminal 5g and the signal processing apparatus 53 may be separate elements.

The estimation unit 21g uses the signal processing apparatus 3 to transmit signals bearing transmission timing information from multiple distributed antennas 4. The transmission timing information may be the timings at which the signal processing apparatus 3 was to transmit the signals bearing the transmission timing information or may be estimated timings for the timings at which the signals were to be transmitted to the multiple distributed antennas 4. In the case in which a signal representing the propagation delay offset for each distributed antenna 4 has been acquired from the terminal 5g, the estimation unit 21g records the propagation delay offset for each distributed antenna 4.

The estimation unit 54g records the actual timings at which the signals bearing the transmission timing information were received at the terminal antennas 51. The estimation unit 54g determines (calculates) the offsets between the transmission timings indicated by the transmission timing information in the signals bearing the transmission timing information and actual timings at which the signals bearing the transmission timing information were received. The estimation unit 54g estimates the propagation delay offset for each distributed antenna 4 based on the determined offsets. The estimation unit 54g uses the terminal antennas 51 to transmit a signal representing the propagation delay offset for each distributed antenna to the estimation unit 21g. That is, the estimation unit 54g feeds back the propagation delay offset for each distributed antenna 4 to the estimation unit 21g.

In the case in which the distributed antennas 4 that are to execute coherent joint transmission have been selected, the estimation unit 54g may feed back, for the distributed antennas 4 that were selected, the propagation delay offsets at the terminal 5g for propagation between the distributed antennas 4 and the terminal 5g. In the case in which the distributed antennas 4 that are to execute coherent transmission have not been selected, the estimation unit 54g may feed back the propagation delay offsets at the terminal 5g for propagation between the distributed antennas 4 and the terminal 5g for all of the distributed antennas 4.

The signal representing the propagation delay offset for each distributed antenna 4 (the signal used for feedback) is not limited to being a specific uplink signal. For example, the signal representing the propagation delay offsets may be a higher-layer data signal or may be a signal in a prescribed format in which propagation delay offset information can be carried. For example, the signal representing the propagation delay offsets may be on a physical uplink shared channel (PUSCH), may be a sounding reference signal (SRS), or may be on a physical uplink control channel (PUCCH). For example, the signal representing the propagation delay offsets may be a data frame or may be a frame dedicated to carrying propagation delay offset information.

In the case in which the estimation unit 54g has estimated the propagation delay offsets for the section between the signal processing apparatus 3 and the terminal 5g (the propagation delay offsets taking into account the propagation delay (propagation time) in the wired section) based on the transmission timing information representing the timings at which the signal processing apparatus 3 transmitted signals, the control unit 23 controls the transmission timing for each distributed antenna 4 so that the propagation delay offset estimated for each distributed antenna 4 is less than or equal to the tolerable delay offset based only on the propagation delay offset estimated for each distributed antenna 4. The same applies to the second embodiment and the third embodiment.

In the case in which the estimation unit 54g has estimated the propagation delay offsets in the wireless section between the distributed antennas 4 and the terminal 5g (the propagation delay offsets not taking into account the propagation delay (propagation time) in the wired section) based on the transmission timing information representing estimated timings for the timings at which the distributed antennas 4 transmitted the signals, the control unit 23 may control the transmission timing for each distributed antenna 4 so that the propagation delay offset estimated for each distributed antenna 4 is less than or equal to the tolerable delay offset based on the propagation delay offsets taking into account the propagation delay in the wired section, which has been measured in advance. The same applies to the second embodiment and the third embodiment.

Next, an example of operations in the distributed antenna system 1g will be explained.

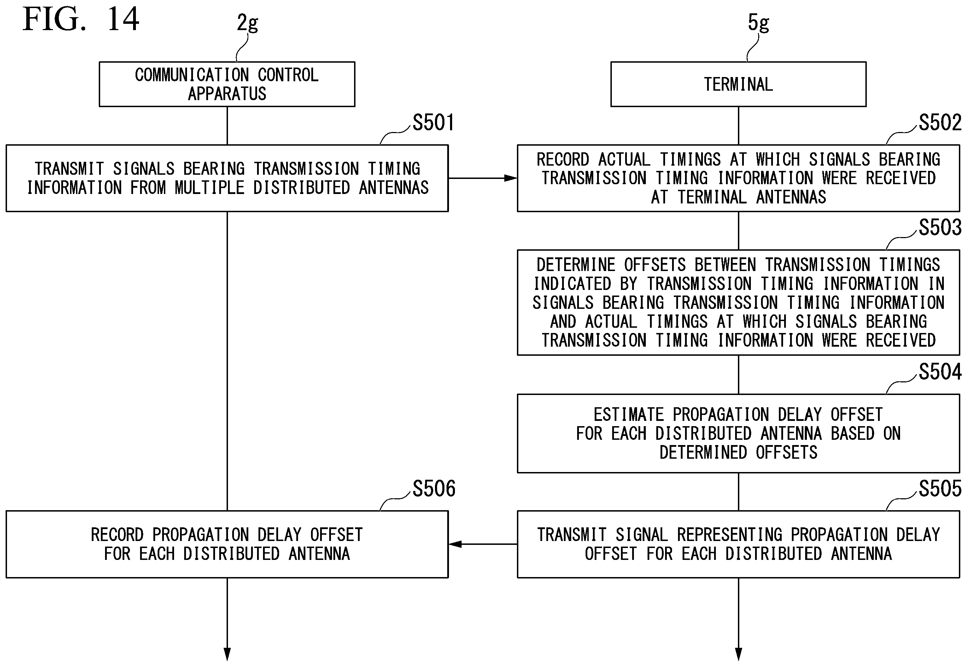

FIG. 14 is a sequence diagram indicating an example of operations in the distributed antenna system 1g in the seventh embodiment. The communication control apparatus 2g transmits signals bearing transmission timing information from the multiple distributed antennas 4 (step S501).

The terminal 5g records the actual timings at which the signals bearing the transmission timing information were received at the terminal antennas 51 (step S502). The terminal 5g determines (calculates) the offsets between the transmission timings indicated by the transmission timing information in the signals bearing the transmission timing information and the actual timings at which the signals bearing the transmission timing information were received (step S503). The terminal 5g estimates the propagation delay offset for each distributed antenna 4 based on the determined offsets (step S504). The terminal 5g transmits a signal representing the propagation delay offset for each distributed antenna (step S505). The communication control apparatus 2g records the propagation delay offset for each distributed antenna 4 (step S506).

As indicated above, the estimation unit 54g estimates the propagation delay offsets based on the offsets between transmission timings indicated by transmission timing information in signals bearing the transmission timing information and the actual timings at which the signals bearing the transmission timing information were received. As a result thereof, degradations in communication quality due to inter-symbol interference can be suppressed.

### (Hardware Configuration)

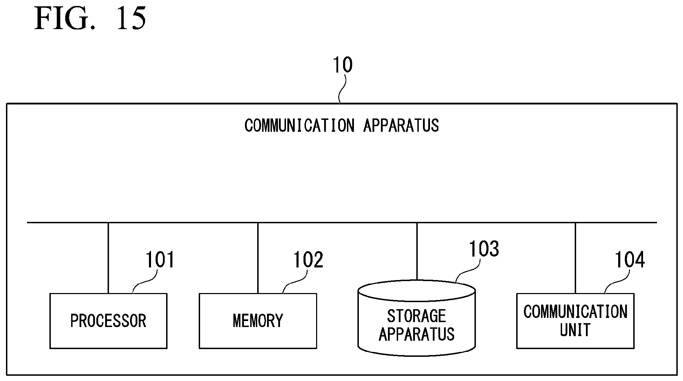

FIG. 15 is a diagram illustrating an example of a hardware configuration of a communication apparatus in the respective embodiments. The example of the hardware configuration of the communication apparatus 10 corresponds to an example of the hardware configurations in the respective communication apparatuses (the communication control apparatus, the signal processing apparatus, the higher-level signal processing apparatus, and the terminal) in the respective embodiments.

The communication apparatus 10 is realized as software by a processor 101 such as a CPU (Central Processing Unit) executing a program stored in a memory 102 and a storage apparatus 103 having a non-volatile recording medium (non-transitory recording medium). The program may be recorded on a computer-readable recording medium. The computer-readable recording medium is, for example, a portable medium such as a flexible disk, a magneto-optic disc, a ROM (Read-Only Memory), or a CD-ROM (Compact Disc Read-Only Memory), or a non-transitory recording medium like a storage apparatus, such as a hard disk or a solid-state drive (SSD) that is integrated in a computer system. The communication unit 104 executes a prescribed communication process.

The communication apparatus 10 may be realized by using, for example, hardware (accelerator) including an electronic circuit (or circuitry) using an LSI (Large-Scale Integrated circuit), an ASIC (Application-Specific Integrated Circuit), a PLD (Programmable Logic Device), an FPGA (Field-Programmable Gate Array), or the like.

While embodiments of this invention have been explained in detail with reference to the drawings, the specific configuration is not limited to these embodiments, and designs and the like within a range not departing from the gist of the present invention are also included.

### [Industrial Applicability]

The present invention is applicable to communication systems such as distributed antenna systems.

### [Reference Signs List]

1a, 1b, 1c, 1d, 1e, 1f Distributed antenna system
2a, 2b, 2c, 2d, 2e, 2f Communication control apparatus
3 Signal processing apparatus
4 Distributed antenna
5a, 5b, 5c, 5d, 5e, 5f Terminal
10 Communication apparatus
21a, 21b, 21c, 21d, 21e, 21f Estimation unit
22 Selection unit
23 Control unit
51 Terminal antenna
52d, 52f Communication unit
53 Signal processing apparatus
54e, 54g Estimation unit
100 Distributed antenna system
101 Processor
102 Memory
103 Storage apparatus
104 Communication unit
200 Communication control apparatus
300 Signal processing apparatus
400 Distributed antenna
500 Terminal
501 Terminal antenna

## Claims

1. A communication control method to be executed by a distributed antenna system for controlling coherent transmission between a terminal, which communicates with one or more signal processing apparatus or a higher-level signal processing apparatus through multiple distributed antennas that execute coherent joint transmission, and the multiple distributed antennas, the communication control method including:
a step of estimating, for each distributed antenna among the multiple distributed antennas, a propagation delay offset in the terminal for propagation from the one or more signal processing apparatus or the higher-level signal processing apparatus to the terminal in accordance with a propagation delay from the one or more signal processing apparatus or the higher-level signal processing apparatus to the terminal, or a propagation delay offset in the terminal for propagation from the multiple distributed antennas to the terminal in accordance with a propagation delay from the one or more signal processing apparatus or the higher-level signal processing apparatus to the multiple distributed antennas and a propagation delay from the multiple distributed antennas to the terminal; and
a step of controlling a transmission timing for each distributed antenna so that the propagation delay offset estimated for each distributed antenna is less than or equal to a tolerable delay offset.

2. The communication control method according to claim 1, wherein the step of estimating includes estimating the propagation delay offset based on an offset between a scheduled timing at which a known signal was to be received and an actual timing at which the known signal was received.

3. The communication control method according to claim 1, wherein the step of estimating includes estimating the propagation delay offset based on an offset between a transmission timing indicated by transmission timing information in a signal bearing the transmission timing information, and an actual timing at which the signal bearing the transmission timing information was received.

4. The communication control method according to claim 1, wherein the step of controlling includes controlling the transmission timing for each distributed antenna so that the propagation delay offset estimated for each distributed antenna is eliminated.

5. A distributed antenna system for controlling coherent transmission between a terminal, which communicates with one or more signal processing apparatus or a higher-level signal processing apparatus through multiple distributed antennas that execute coherent joint transmission, and the multiple distributed antennas, wherein the distributed antenna system comprises:
an estimation unit that estimates, for each distributed antenna among the multiple distributed antennas, a propagation delay offset in the terminal for propagation from the one or more signal processing apparatus or the higher-level signal processing apparatus to the terminal in accordance with a propagation delay from the one or more signal processing apparatus or the higher-level signal processing apparatus to the terminal, or a propagation delay offset in the terminal for propagation from the multiple distributed antennas to the terminal in accordance with a propagation delay from the one or more signal processing apparatus or the higher-level signal processing apparatus to the multiple distributed antennas and a propagation delay from the multiple distributed antennas to the terminal; and
a control unit that controls a transmission timing for each distributed antenna so that the propagation delay offset estimated for each distributed antenna is less than or equal to a tolerable delay offset.
